# EUROPEAN PATENT SPECIFICATION

(11) **EP 0 433 524 B1**
(45) Date of publication and mention of the grant of the patent: **16.03.1994**
(21) Application number: 89850446.9
(22) Date of filing: 22.12.1989
(51) Int. Cl.: B60K 37/02

(54) **Information panel for a vehicle**
Anzeigeplatte für Informationen in einem Fahrzeug
Panneau d'affichage d'informations pour un véhicule

(43) Date of publication of application: 26.06.1991
(73) Proprietor: AB VOLVO, 405 08 Göteborg (SE)
(72) Inventor: Wikström, Ove, S-416 56 Göteborg (SE); Warnholz, Lars-Erik, S-440 42 Alafors (SE)
(74) Representative: Mossmark, Anders

(56) References cited:
- EP-A- 0 338 405
- FR-A- 2 586 625
- US-A- 2 946 982
- PATENT ABSTRACTS OF JAPAN , Vol 11, No. 146 (M-587)(2593), 13 May 1987; & JP-A-61282139 (NISSAN) 12.12.1986
- PATENT ABSTRACTS OF JAPAN, Vol 4, No. 049 (M-004), 15 April 1980; & JP-A-55019652 (NISSAN) 12.02.1980

## Description

The present invention relates to an information device for a driver of a vehicle according to the preamble of claim 1. Such a device is known from, for example, EP-A-0 338 405.

There is a general strive in today's society to utilize advances within information and communication technology to increase safety and efficiency as well as to minimize the environmental consequences of road traffic. One of the most important elements in accordance with the strategy as defined above, is to provide accurate and up-to-date traffic information to the road users. Another important element is to provide for reliable possibilities of communication e.g. between drivers working in the same company as well as between drivers and different local management centers.

The above requires certain means suitable for presenting the above kind of information.

It is a first object of this invention to create an information panel for a driver of a vehicle and a storage compartment for storing said panel, which fulfills the above mentioned object.

A general problem which a designer has to face within this field, is that a dashboard of today has driver facing surfaces which are already occupied by other necessary equipment. Therefore it is a further object of this invention to provide for such an information panel and storage compartment which does not require any or only minor alteration of the existing equipment.

Still a further object of the invention is to be able to provide for an information panel and a storage compartment mounted within a driving compartment, which does not decrease the field of view of the driver.

Still a further object of this invention is to provide for a unit in accordance with the invention, in a safe and secure manner. This implies that the device does not increase the risk of accident nor should it increase the risk of injuries. To fulfill the latter it is necessary that the device does not distract the driver during driving and that the device is securely mounted in such a manner that it does not increase the risk of injuries in case of an accident. Further objects are to provide for such a device in accordance with the invention which is easy to produce and easy to install in order to minimize costs.

With a view to attaining these objects, the present invention provides an information device as specified in claim 1. Preferred embodiments of the information device are detailed in the dependent claims.

The invention will be better understood by an examination of the following description together with the accompanied drawings in which:
- Fig. 1: is a perspective view of a device in accordance with the invention mounted on the top of a dashboard,
- Fig. 2: is a perspective view of a preferred mode of the invention, mounted integral with the dashboard, showing the information panel in its active position,
- Fig. 3: is a perspective view of a preferred mode of means interconnecting the information panel and the storage compartment,
- Fig. 4: is a perspective view of a preferred base part of the compartment,
- Fig. 5: is a perspective view of a compartment and a means of interconnection in accordance with the preferred mode of the invention, and,
- Fig. 6: is a perspective view of a part from behind of the invention.

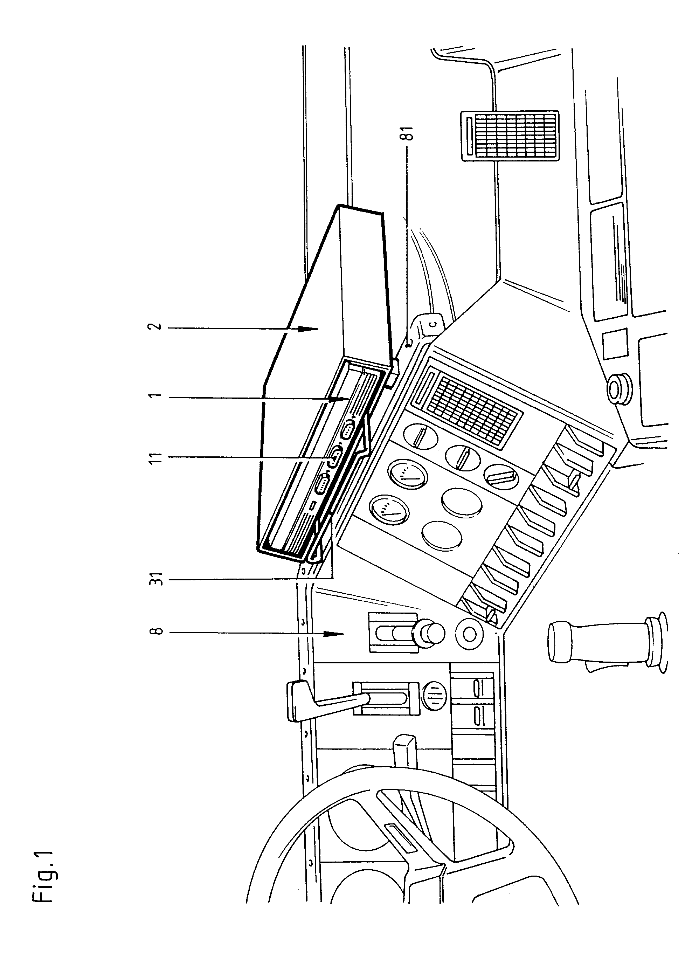

Fig. 1 shows a dashboard 8, of a lorry, on top of which there is mounted a storage compartment 2. Within the storage compartment 2, an information panel 1 is kept in its storage position. In this position the information panel 1 is fully retracted within the storage compartment 2. The compartment 2 is mounted in such a manner that the opening of it faces the position of the driver. Flush with the opening of the compartment the information panel presents front surface onto which there is mounted a handle 31 and some connections 11. There are connections 11 for power supply and information supply as well as for a printer unit and other accessories.

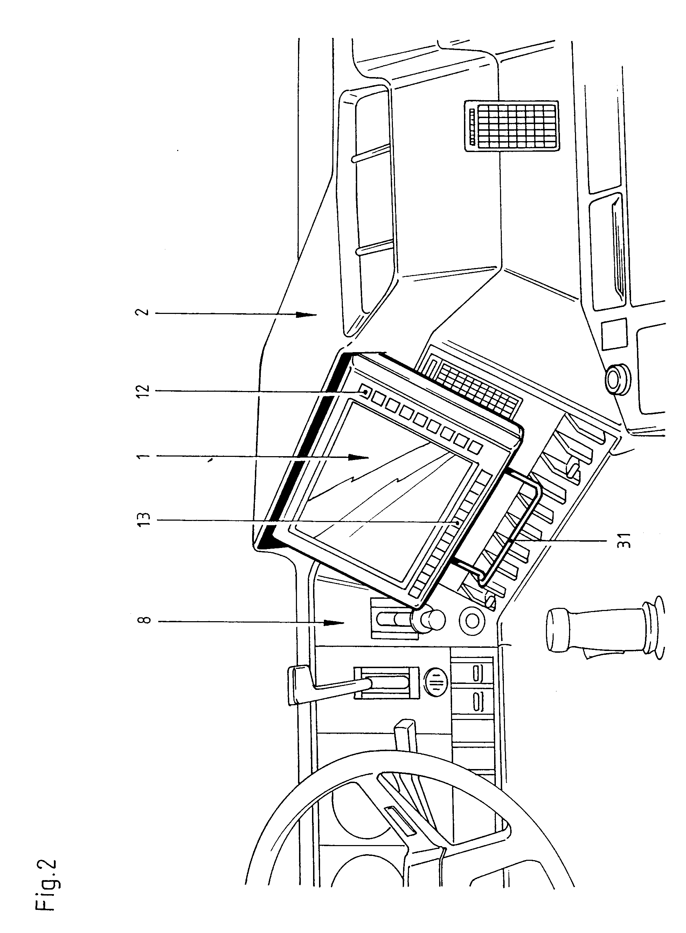

Fig. 2 shows a second mode of mounting the device in accordance with the invention. Here a storage compartment 2 has been made integral with the dashboard 8. By doing so, sharp edges can be totally avoided and it is possible to provide for an arrangement which is aesthetically more fulfilled. The information panel 1 is here in its active position. This means that the information panel has been pulled out of the storage compartment 2 and has been pivoted downward to contact the underlying surface of the dashboard 8. As can be seen from this figure the panel is not only thought to be used in order to present information to the driver but also in order to present a means by which the driver can communicate with other units. In the figure this is exemplified by having a sort of a keyboard 12, 13 on the information panel 1. The use of devices like keyboards, makes it necessary that the information panel 1 is positioned in a stable manner, so that the buttons can be operated in a convenient manner. Together with a shown dashboard this is feasible without any extra means, since the surface that faces the drivers position is angled slightly upwards, i.e. gravity keeps the information panel stable on this surface.

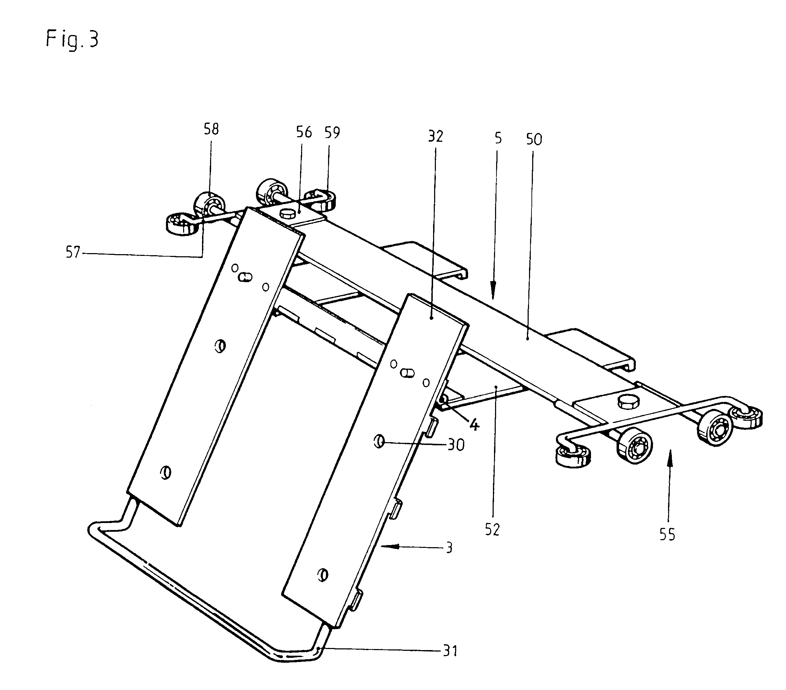

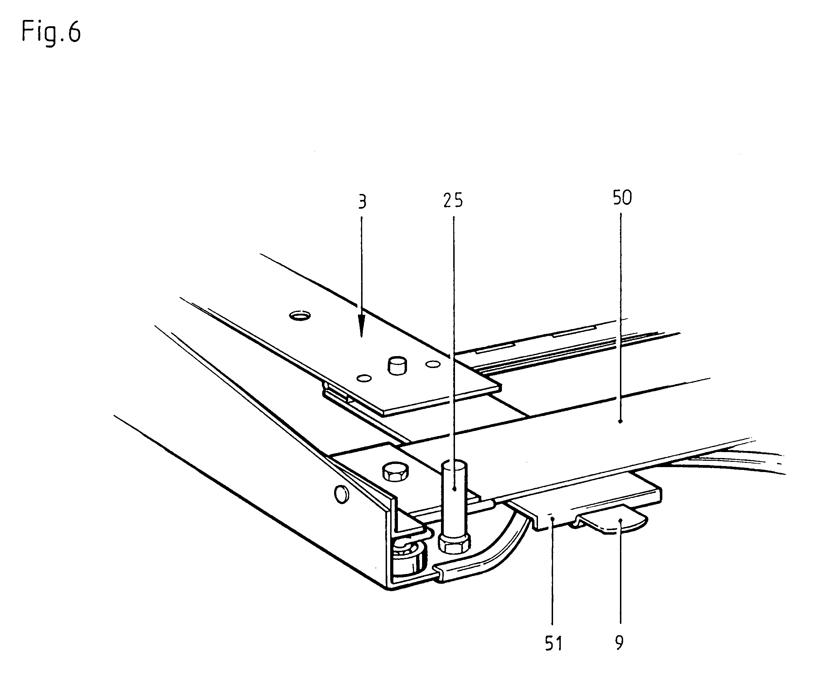

Fig. 3 is perspective view, from the front, of a means of interconnection 3, 4, 5 which interconnects the panel 1 with the compartment 2. The figure shows a first body member 5 which consist of a lengthy sheet metal part 50 which at each end part has bearing devices 55 attached thereto. The lengthy device has two plates 52 transversally fastened thereon. At the rear end, each one of these plates 52 is arranged with a downwardly extending abutment 51 (see Fig. 6). The opposite ends of these plates 52 act as two protruding brackets. At the front edges of these brackets there is mounted a hinge 4. This hinge 4 extends parallely with the lengthy member 50 and pivotally connects two supporting members 3 with said first body member 50. The support members 3 are arranged with four through holes 30 for attachment of the information panel 1 on top of these support members 30. The two support members 3 can only be pivoted up to a plane B, which is coplanar with the extension of the first body member 50, since the upper edge portions 32 of the supporting members 3 protrude a certain distance in relation to the hinge 4. At each end of the lengthy member 50 there is mounted a bearing device 55.

The bearing device 55 has a platelike support member 56 for rigid attachment of the device to the first body member 50. To this support member 56 there are welded a number of rods 57 which at their ends support bearings 58, 59. Two of these bearings 58 are mounted in order to position the interacting means 3, 4, 5 in a first transverse direction i.e. horizontally, without producing any substantial friction during sliding. The other two bearings 59 are mounted in such a manner that they position the interacting means 3, 4, 5 in a corresponding manner in a second transverse direction. This arrangement results in a device which is slidable without any substantial friction counter-acting the sliding movement thereof.

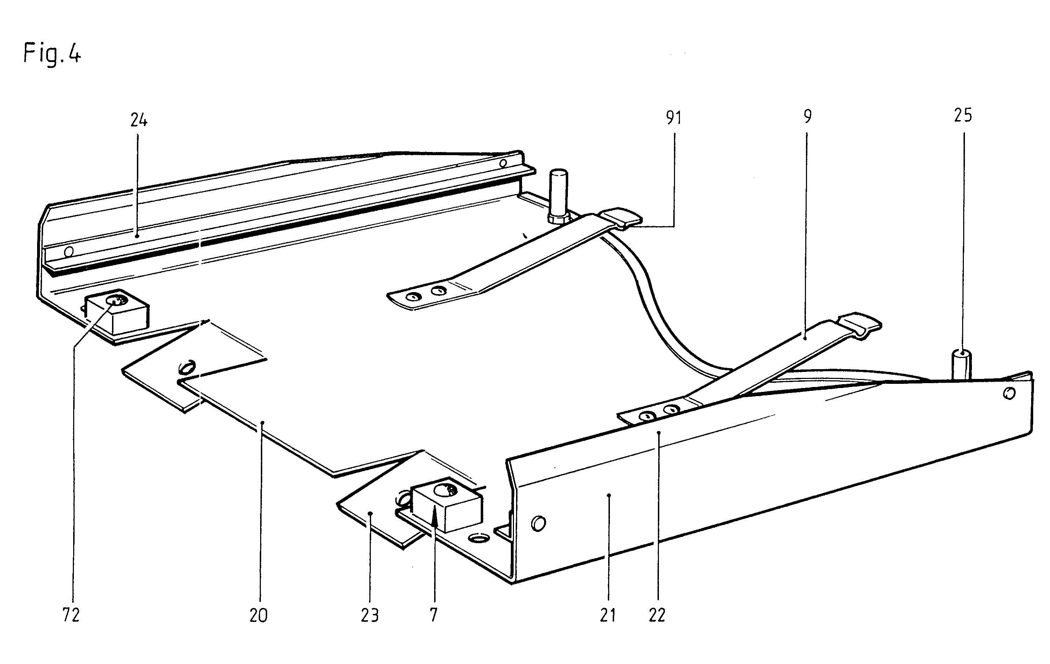

Fig. 4 shows a base-part of the compartment. This base part mainly consists of a sheet metal part which has been bent into a wide U-form having a bottom part 20, two side walls 21 and inwardly directed flanges 22 at the top of each side wall 21. At the bottom part 20 two flaps 23, presenting holes, are bent down to an angle so as to correspond to the top surface of a rigid attachment part 81 of the dashboard 8. On the inside of each side wall 21 there is attached a L-formed guide element 24, forming a guiding channel.

At the rear end of the compartment 2 there are mounted two stop elements 25. Further at this end there are mounted two resilient members 9. These resilient devices 9 are intended to interact with the downwardly directed part 51 of the first body member 50 so that the information panel 1 can be smoothly slid into the compartment 2. Each resilient device 9 is in its preferred embodiment also provided with an arresting means 91 which interacts with said downwardly directed part 51 in order to keep the information panel 1 arrested in an innermost position, so that driving on a heavily angled slope and/or a major acceleration force will not result in the information panel 1 coming out of the storage compartment. In order to define a fixed position for the means of interaction in its other extreme position, there are mounted two stop portion members 7 at the front end of the compartment on top of the bottom surface 20 thereof. The front edge portion of the first body member 50 contacts the rear surface of each said stop member 7, when in its other extreme position. The top surface of each stop member 7 also acts as a sliding surface for said information panel 1. In order to decrease the speed with which the information panel 1 can slide into the compartment 2 there is arranged a high friction unit 72 together with the top surface of said stop member.

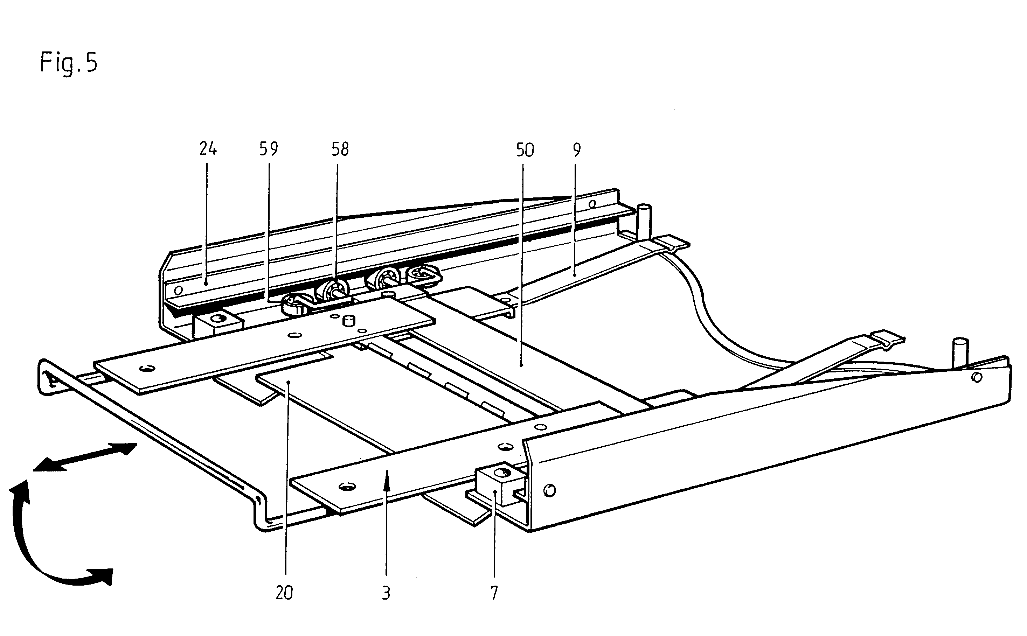

Fig. 5 is a perspective view of the base-part of the compartment 2 comprising an interacting means 3, 4 positioned therein. The guiding channel of the compartment 2 is delimited partly of the bottom 20, partly of the side wall 21 and at the top of said L-formed strip 24. The distance between the lower surface of the L-formed strip 24 and the upper surface of the bottom 20 is just a little bit larger than the diameter of each vertically positioned bearing 58. This figure also shows the exact positioning of each horizontally arranged bearing 59.

Fig. 6 shows the lengthy body member 50 when in its innermost position. Accordingly the downwardly directed part 51 of the body member 50 interact with the arresting member 91 of the resilient devices 9. This keeps the information panel 1 in place in this position, as has been described above.

When the information panel is not used it is normally positioned in its storage position within the storage compartment 2, as is shown in Fig. 1, and is arrested in this position. The information panel is not normally intended for use during driving, especially since this could distract the driver which might be the cause of an accident. Accordingly the driver is supposed to stop the vehicle before he or she intends to use the information panel 1. A feature which indicates this fact to the driver is that the information panel 1 in its active position, i.e. flipped down as in Fig. 2, covers certain instruments which are, if not necessary, at least useful for driving the vehicle.

When the driver wishes to use the information panel 1, he just grabs the handle 31 and pulls the unit out of the compartment 1. Thanks to the bearings 58, 59 the unit will slide relatively easily out of the compartment 2. In its outermost position the front edge of the lengthy member 50 will contact the rear surface 7 of the stop member. This results in the driver noticing that a firm stop position has been reached. The information panel 1 can now be pivoted downwardly into its active position, i.e. supported by the surface of the dashboard which faces the driver. It is now possible to use the information panel for receiving information and/or for sending information.

After use the information panel first has to be pivoted upwardly until it reaches a main-plane, which includes the main-plane of the storage compartment 2, since the top part of each support member 3 at this position contact the forwardly protruding parts 52, so that they cannot be pivoted further. The information panel now has to be pushed into the storage compartment 2. When it reaches its innermost position, this is noticeable by a snapping-in action.

The invention is not limited by the above-described mode of examples but can be widely modified within the scope of the following claims. For instance, it is not necessary to let the information panel pivot downwardly. It is also possible to let the information panel pivot upwardly and then to use a support bar to keep the information panel stable in this upwardly pivoted position. Also different designs of the dashboard will lead the skilled man to do obvious modifications. If, for instance the dashboard is equipped with driver facing surfaces which are totally vertical it would be preferable to angle the handle 11 a bit downwardly so that the handle could act as a leg, which contacts the surface of the dashboard, in the active position, so that the gravitation would stabilize the position of the information panel in this active position.

A further modification would be to supplement the safety means of the device. The handle 31 could for instance be supplemented with a release button which had to be activated in order to release the information panel 1 from its storage position. It would then also be possible to interconnect such a release button with a control system of the vehicle which could make it impossible to activate the release button if the vehicle was moving. Together with such a control system it would also be possible to interconnect units with a control mechanism which would make it impossible to drive the car if the information panel 1 was not first put in its storage position or at least make it impossible to drive the vehicle above a certain speed-limit, e.g 10 km/h so that it can be used if the vehicle is stuck in a slow moving traffic jam. An alternative would be an alarm system which would indicate to the driver that he/she is driving with the information panel not being positioned in its storage position, e.g. as is today common concerning the parking brake. Still a further alternative would be to provide for a conditional power supply to the panel 1, e.g. there is a device which cuts the power to the panel if the vehicle is not standing still (or moving faster than a certain speed limit).

It is obvious for the skilled man that the unit 1, 2 not has to be attached on top of the dashboard, but can be positioned anywhere else where it is thought to be suitable. It would for instance be possible to mount it vertically in a hole in the floor, to be pulled upwardly and out of such a compartment into its active position. The disadvantage with this kind of solutions being that the information panel will be positioned somewhat inconveniently for the driver, in the active position. Moreover it is obvious that the device can be used together with any kind of vehicle, although commercial vehicles such as lorries, taxis, etc are the preferred kind. In this context it should be noted that most vehicles have a dashboard whose upper portion comprises an upwardly facing surface which is suitable for mounting the compartment. The inclination of this surface can differ widely. Normally, however, it is substantially horisontal but this is not essential to the invention, since also inclined surfaces are suitable, as is the case in the shown embodiment. The important matter is that it is suitable for its purpose. The same applies for the inclination of the surface of the dashboard that faces the driver, i.e it can vary within wide ranges and still fulfil the intended purpose.

Further it is obvious for the skilled man that the device in accordance with the invention also could be used by a person not positioned in the driving position. Such a device could accordingly be positioned differently, i.e. not facing the position of the driver. Of course a driving compartment could be equipped with several such devices, of which the one (those) not facing the driver would necessitate any interrelation to a safety system (optional) as mentioned above.

A further minor modification would be to make the information panel 1 removably arranged in relation to the dashboard 8, so that it would be easily feasable to bring the panel along, in order to avoid theft or make it possible to use it elsewhere. For instance, the panel 2 can be releasably interconnected to an attachment device secured to the dashboard (generally as is known for radios) or the device of interconnection 3,4,5 can be releasably attached to the guiding channel of the compartment 2.

## Claims

1. Information device for a driver of a vehicle, comprising an information panel (1) and a storage compartment (2) with an opening for storing said panel, said storage compartment (2) being provided with stop members (7), means of attachment and slidable means of interconnection (3, 4, 5) to interconnect said panel (1) with said compartment (2) in such a manner as to allow said panel (1) to be positioned in a first active position and also in a second storage position, wherein said second storage position defines a first main-plane of said panel (1) which is substantially coplanar with the main-plane of the storage compartment (2) and said first active position defines a second main-plane of said panel, which differs substantially from said first main plane, **characterized in** that said means of interconnection (3, 4, 5) comprises a first body-member (5) slideably arranged within said compartment (2) towards and away from said opening, and a second body-member (3) pivotably connected to said first body member (5) by hinge-means (4) at one end of said first body-member, to which second body member (3) said panel is attachable for displacement between said two main-planes, and in that said storage compartment (2) is provided with said stop members (7) for maintaining said first body member (5) within the storage compartment when said information panel (1) is in said first active position, and arresting means (91) for retaining said information panel (1) within the storage compartment (2) in said second storage position.

2. Information device according to claim 1, **characterized in** that said means of interconnection (3, 4, 5) further comprises low-friction means of contact (55) which interact with guiding means (24) within said compartment (2).

3. Information device according to claim 1 or 2, **characterized in** that said information panel (1) is releasably connected to said second body-member (3).

4. A vehicle dashboard (8), **characterized in** that it comprises an information device according to one of claims 1 to 3.

5. A dashboard according to claim 4, **characterized in** that means are provided to cut the power supply to the information panel above a certain speed limit.

6. A dashboard according to claim 4 or 5, **characterized in** that the storage compartment (2) is mounted on top of the dashboard (8), on a surface which is normally substantially horizontal, and is attached to at least one rigid part (81) thereof.

7. A dashboard according to claim 4, **characterized in** that the second main-plane is substantially coplanar with one of the surfaces of the dashboard (8) which faces the position of the driver.

## Patentansprüche

**1.** Informationsvorrichtung für einen Fahrer eines Fahrzeugs mit einer Anzeigeplatte (1) und einem Unterbringungsfach (2) mit einer Öffnung zum Aufbewahren der Platte, wobei das Unterbringungsfach (2) mit Anschlagteilen (7), einer Befestigungseinrichtung und einer Verbindungseinrichtung (3, 4, 5) zur Verbindung der Platte (1) mit dem Fach in der Weise versehen ist, daß die Platte in einer ersten aktiven Stellung und ebenfalls in einer zweiten Unterbringungsstellung positionierbar ist, wobei die zweite Unterbringungsstellung eine erste Hauptebene der Platte (1) festlegt, die im wesentlichen koplanar mit der Hauptebene des Unterbringungsfach (2) verläuft, und wobei die erste aktive Stellung eine zweite Hauptebene der Platte festlegt, welche sich erheblich von der ersten Hauptebene unterscheidet, dadurch gekennzeichnet, daß die Verbindungseinrichtung (3, 4, 5) einen ersten Körperteil (5), der innerhalb des Fachs (2) in Richtung auf die Öffnung und von dieser weg gleitend verschiebbar angeordnet ist, und einen zweiten Körperteil (3) besitzt, der schwenkbar an dem ersten Körperteil (5) mittels einer Gelenkeinrichtung (4) an einem Ende des ersten Körperteils angebracht ist, wobei die Platte an dem zweiten Körperteil (3) zur Verlagerung zwischen den beiden Hauptebenen anbringbar ist, und daß das Unterbringungsfach (2) mit den Anschlagteilen (7) zum Halten des ersten Körperteils (5) innerhalb des Aufbewahrungsfachs, wenn die Anzeigeplatte (1) sich in der ersten aktiven Stellung befindet, und eine Arretierungseinrichtung (91) zum Halten der Anzeigeplatte (1) innerhalb des Unterbringungsfachs (2) in der zweiten Aufbewahrungsstellung versehen ist.

**2.** Anzeigevorrichtung nach Anspruch 1, dadurch gekennzeichnet, daß zu der Verbindungseinrichtung (3, 4, 5) weiterhin eine Kontakteinrichtung (55) mit niedrigem Reibwert gehört, die mit einer Führungseinrichtung (24) innerhalb des Fachs (2) zusammenwirkt.

**3.** Anzeigevorrichtung nach Anspruch 1 oder 2, dadurch gekennzeichnet, daß die Anzeigeplatte (1) lösbar mit dem zweiten Körperteil (3) verbunden ist.

**4.** Armaturenbrett nach Anspruch 4, dadurch gekennzeichnet, daß Einrichtungen vorgesehen sind, durch die die Stromversorgung zu der Anzeigetafel oberhalb einer gewissen Geschwindigkeitsgrenze unterbrechbar sind.

**6.** Armaturenbrett nach Anspruch 4 oder 5, dadurch gekennzeichnet, daß das Unterbringungsfach (2) auf der Oberseite des Armaturenbretts (8) auf einer Fläche montiert ist, die normalerweis im wesentlichen horizontal verläuft, und wenigstens in einem festen Abschnitt (81) desselben angebracht ist.

**7.** Armaturenbrett nach Anspruch 4, dadurch gekennzeichnet, daß die zweite Hauptebene im wesentlichen koplanar mit einer der Oberflächen des Armaturenbretts (8) verläuft, die auf die Stellung des Fahrers weist.

## Revendications

1. Dispositif d'information pour un conducteur d'un véhicule, comportant un panneau d'information (1) et un compartiment de rangement (2) avec une ouverture de façon à ranger ledit panneau, ledit compartiment de rangement (2) étant pourvu d'éléments de butée (7), de moyens de fixation et de moyens coulissants d'interconnexion (3, 4, 5) afin d'interconnecter ledit panneau (1) et ledit compartiment (2) de façon à permettre audit panneau (1) d'être positionné dans une première position active et également dans une deuxième position, ladite deuxième position de rangement définissant un premier plan principal dudit panneau (1) qui est sensiblement coplanaire au plan principal dudit compartiment de rangement (2) et ladite première position active définissant un deuxième plan principal dudit panneau, qui diffère sensiblement dudit premier plan principal, caractérisé en ce que lesdits moyens d'interconnexion (3, 4, 5) comportent un premier élément de corps (5) disposé de façon coulissante dans ledit compartiment (2) vers et à l'écart de ladite ouverture, et un deuxième élément de corps (3) relié de façon coulissante audit premier élément de corps (5) par des moyens de charnière (4) à une extrémité dudit premier élément de corps, ledit panneau étant fixé au deuxième élément de corps (3) pour un déplacement entre les deux plans principaux, et en ce que ledit compartiment de rangement (2) est pourvu desdits éléments de butée (7) afin de maintenir ledit premier élément de corps (5) dans le compartiment de rangement lorsque ledit panneau d'information (1) dans ladite première position active, et des moyens d'arrêt (91) destinés à retenir ledit panneau d'information (1) dans le compartiment de rangement (2) dans ladite deuxième position de rangement.

2. Dispositif d'information selon la revendication 1, caractérisé en ce que lesdits moyens d'interconnexion (3, 4, 5) comportent en outre des moyens de contact à faible friction (55) qui coopèrent avec des moyens de guidage (24) dans ledit compartiment (2).

3. Dispositif d'information selon la revendication 2, caractérisé en ce que ledit panneau d'information (1) est relié de façon détachable audit deuxième élément de corps (3).

4. Tableau de bord de véhicule (8), caractérisé en ce qu'il comporte un dispositif d'information selon l'une des revendications 1 à 3.

5. Tableau de bord selon la revendication 4, caractérisé en ce que des moyens sont prévus pour couper l'alimentation du panneau d'information au-dessus d'une certaine limite de vitesse.

6. Tableau de bord selon la revendication 4 ou 5, caractérisé en ce que le compartiment de rangement (2) est monté sur le dessus du tableau de bord (8) sur une surface qui est normalement sensiblement horizontale, et est fixé sur au moins une partie rigide de celui-ci.

7. Tableau de bord selon la revendication 4, caractérisé en ce que le deuxième plan est sensiblement coplanaire à l'une des surfaces du tableau de bord (8) qui est dirigées vers la position du conducteur.
